# EUROPÄISCHE PATENTSCHRIFT

(11) **EP 4 153 680 B1**
(45) Veröffentlichungstag und Bekanntmachung des Hinweises auf die Patenterteilung: **28.02.2024**
(21) Anmeldenummer: 21724301.3
(22) Anmeldetag: 11.05.2021
(51) Int. Cl.: C08L 69/00

(54) **POLYCARBONAT-BLEND MIT VERRINGERTEN STÖRGERÄUSCHEN**
POLYCARBONATE BLEND WITH REDUCED NOISE
MÉLANGE POLYCARBONATE À BROUILLAGE RÉDUIT

(30) Priorität: 18.05.2020 EP 20175182
(43) Veröffentlichungstag der Anmeldung: 29.03.2023
(73) Patentinhaber: Covestro Deutschland AG, 51373 Leverkusen (DE)
(72) Erfinder: PUPOVAC, Kristina, 40213 Düsseldorf (DE)
(74) Vertreter: Levpat
(86) Internationale Anmeldenummer: PCT/EP2021/062398
(87) Internationale Veröffentlichungsnummer: WO 2021/233727

(56) Entgegenhaltungen:
- WO-A1-2018/122140
- WO-A1-2019/195516
- CN-A- 107 353 617

## Beschreibung

Die vorliegende Erfindung betrifft eine thermoplastische Formmasse enthaltend Polycarbonat und/oder Polyestercarbonat, kautschukmodifiziertes Vinyl(co)polymerisat und ein Polyorganosiloxan-Masterbatch, ein Verfahren zur Herstellung der Formmasse und die Verwendung der Formmasse zur Herstellung von Formkörpern sowie die hergestellten Formkörper.

Polycarbonat Blends sind seit langem bekannt und kommen in vielen Anwendungsbereichen zum Einsatz. Durch die Wahl der Blendpartner, möglicher weiterer Additive und die jeweiligen Anteile der Komponenten lassen sich die Eigenschaften in weiten Bereichen variieren und damit an die Anforderungen des herzustellenden Bauteils anpassen. Ein großer Anwendungsbereich ist der Fahrzeugbau, insbesondere die Fertigung von Automobilen und öffentlichen Transportmitteln wie Bussen und Bahnen.

Das Thema der Geräuschqualität nimmt in der Fahrzeugindustrie einen bedeutenden Stellenwert ein. Die Entwicklung sowohl von Gesamtfahrzeugen als auch von Zulieferteilen unterliegen wachsenden Anforderungen an die Geräusche, die von den entsprechenden Herstellern definiert, umgesetzt und dokumentiert werden müssen. Insbesondere bei Elektrofahrzeugen erhöht die Forderung nach weniger Gewicht die Konstruktionsprobleme bei der Verhinderung von Störgeräuschen.

Das Stick-Slip Phänomen (Haft-Gleit Effekt) bezeichnet das Ruckgleiten von zwei gegeneinander bewegten Festkörpern. Dieses Phänomen tritt auf, wenn ein Körper bewegt wird, dessen Haftreibung (statische Reibung) deutlich größer ist, als die Gleitreibung (kinetische Reibung). Knarzen oder Quietschen ist ein reibungsinduziertes Geräusch, das durch eine Relativbewegung verursacht wird, die von dem Stick-Slip Phänomen zwischen den Grenzoberflächen herrührt. Die elastische Verformung der beiden Kontaktflächen speichert Energie, die freigesetzt wird, wenn die Haftreibung die Gleitreibung überschreitet. Die Freisetzung von Energie erzeugt eine Vibration der Oberflächen, die die hörbare Quietschgeräusche in einem Bereich von 200 - 10000 Hz erzeugen, die gerade im Fahrzeuginnenraum unangenehm auffallen und oft als Indikator für eine schlechte Konstruktionsqualität herangezogen werden.

Verschiedene Techniken um die Geräusche zu beseitigen bzw. zu minimieren beinhalten: Anbringen von Antiknarzoberflächen oder Narbung, was jedoch nicht auf allen Flächen möglich ist, Änderung der Teilgeometrie (Werkzeuganpassung notwendig), Auftragen von Antiknarzbeschichtung oder Anwendung von geeigneten Schmiermitteln, Filzstreifen oder Schaumstoffdichtungen (technisch realisierbar aber mit zusätzliche Kosten und Arbeitsschritten verbunden) oder sogar Materialwechsel (Auswahl anderer Materialpaarungen sofern möglich in Bezug auf Eigenschaftsprofil).

Es war wünschenswert, einen grundsätzliche Materialwechsel, eine Werkzeuganpassung und zusätzliche Arbeitsschritte zu vermeiden.

Neben den genannten konstruktiven Ansätzen und einem grundsätzlichen Materialwechsel gibt es daher zahlreiche Offenbarungen zu Modifizierungen der thermoplastischen Formmassen mit verschiedenen Additiven, die eine Geräuschreduzierung bewirken sollen.

EP 2 752 454B1 offenbart thermoplastische Harzzusammensetzung zur Geräuschreduzierung, enthaltend ein kautschukverstärktes Vinylharz, welches durch Polymerisieren eines Vinylmonomers in Gegenwart eines Ethylen-α-Olefin-Kautschukpolymers mit einem Schmelzpunkt von 0°C oder höher, erhalten wird, und ein Silikonöl, wobei die Menge an Silikonöl, bezogen auf das in der thermoplastischen Harzzusammensetzung enthaltene Silicium, 0,15 Massen-% oder weniger beträgt, bezogen auf 100 Massen-% der thermischen Harzzusammensetzung.

EP 2 610 307A1 offenbart PC-Zusammensetzungen enthaltend 35 - 80 Massenteile Polycarbonat, 20 - 65 Massenteile kautschukverstärktes Vinylharz welches durch Polymerisieren eines Vinylmonomers in Gegenwart eines Ethylen-α-Olefin-Kautschukpolymers mit einem Schmelzpunkt von 0°C oder höher erhalten wird, wobei die Menge an Ethylen-α-Olefin-Kautschukpolymer, bezogen auf 100 Massen-% der PC-Zusammensetzung, 5 - 30 Massen-% beträgt.

EP 2 418 246A1 offenbart Autoinnenteile basierend auf thermoplastischen Harzzusammensetzungen hergestellt durch Einarbeitung von 0,1 - 8,0 Massenteile eines Silikonöls dessen kinetische Viskosität bei 25°C 10 - 100 000 cSt beträgt, in 100 Massenteile eines kautschukverstärkten Vinylharzes, welches ein Dienkautschuk und ein Ethylen-α-Olefin-Kautschukpolymer enthält, wobei die Gesamtmenge an Dienkautschuk und Ethylen-α-Olefin-Kautschukpolymer 5 - 30 Massen-% beträgt, bezogen auf 100 Massen-% kautschukverstärkten Vinylharzes und das Massenverhältnis von Dienkautschuk zu Ethylen-α-Olefin-Kautschukpolymer 1 - 85 : 90 - 15 beträgt.

WO 2019/195516 A1 offenbart PC/ABS Zusammensetzung (A) enthaltend ein Masterbatch (B) welches ein oder mehrere thermoplastische organische Materialien (B1), ein Silikonelastomer (B2) und / oder ein ungehärtetes Organopolysiloxanpolymer (B3) enthält, wobei im Masterbatch (B) insgesamt 20 bis 60 Gew.-% der Komponenten (B2) + (B3) enthalten sind, bezogen auf das Gewicht von (B1) + (B2) + (B3) und sich in der thermoplastischen Elastomerzusammensetzung insgesamt 0,2 bis 25 Gew.-% vernetztes Silikonelastomer befinden.

Bei dieser Offenbarung wird das Masterbatch als Additiv zu Geräuschreduzierung einer kommerziell verfügbaren Polycarbonat/ABS Zusammensetzung verwendet.

Trotz der verschiedenen offenbarten Möglichkeiten zur Geräuschreduzierung bestand aber weiterhin ein Bedarf nach weiteren Verbesserungen. Insbesondere war es wünschenswert, Formmassen bereitzustellen, die auch bei sehr ungünstigen Bedingungen nur wenig Knarzgeräusche zeigen. So führt beispielsweise eine langsame Bewegung der Teile bei gleichzeitig hoher gegenseitig wirkender Kraft zu einer besonders starken Geräuschentwicklung, die mit den bekannten Kombinationen aus Additiv und Thermoplast nicht reduziert werden können.

Im modernen Fahrzeugbau kommt es oft zu Berührungen von Bauteilen aus verschiedenen Materialklassen. Daher war es weiter wünschenswert, eine Formmasse bereitzustellen, die auch bei Kontakt mit unterschiedlichen Thermoplasten eine geringe Neigung zu Störgeräuschen zeigt.

Es wurde überraschenderweise gefunden, dass die Lösung der hier genannten Aufgaben dann gelingt, wenn die Hauptbestandteile der Blendzusammensetzung und ein Additiv in besonderer Weise ausgewählt werden.

So hat sich überraschenderweise gezeigt, dass eine Formmasse enthaltend
A) mindestens ein Polymer ausgewählt aus der Gruppe bestehend aus Polycarbonat und Polyestercarbonat,
B) ein Polymer enthaltend
   B1) mindestens ein kautschukmodifiziertes Vinyl(co)polymerisat enthaltend
      B1.1) 80 bis 95 Gew.-%, bezogen auf B.1, wenigstens eines Vinylmonomeren und
      B1.2) 5 bis 20 Gew.-%, bezogen auf B1, einer oder mehrerer kautschukelastischer Polybutadien-haltiger Pfropfgrundlagen,
      wobei B 1
      mit den Vinylmonomeren B 1.1 gepfropfte Polybutadien-haltige Kautschukpartikel, die Inklusionen aus Vinyl(co)polymerisat bestehend aus den Vinylmonomeren B 1.1 enthalten,
         und
      eine nicht an diese Kautschukpartikel gebundene und nicht in Kautschukpartikel eingeschlossene Vinyl(co)polymerisat-Matrix bestehend aus den Vinylmonomeren B 1.1
      enthält
   und optional B2) weitere mit Vinylmonomeren gepfropfte Kautschukpartikel aus B2.1) 5 bis 75 Gew.-%, bezogen aufB.2, wenigstens eines Vinylmonomeren auf B2.2) 25 bis 95 Gew.-%, bezogen auf B2, einer oder mehrerer kautschukelastischer Pfropfgrundlagen,
   wobei das Gewichtsverhältnis der Komponente B1 zu B2 mindestens 5: 1 beträgt,
C) ein beim Raumtemperatur festes Masterbatch enthaltend
   C1) ein oder mehrere Copolymere enthaltend Struktureinheiten abgeleitet von einem Olefin und Struktureinheiten abgeleitet von einem polaren Comonomeren ,
   C2) ein vulkanisiertes Silikonelastomer,
   die gewünschten Eigenschaften aufweist.

Die Formmasse enthält
bevorzugt 50-80 Gew.-%, weiter bevorzugt 55 bis 70 Gew.-% der Komponente A,
bevorzugt 10-40 Gew.-%, weiter bevorzugt 15 bis 35 Gew.-% der Komponente B,
bevorzugt 1-10 Gew.-%, weiter bevorzugt 2 bis 8 Gew.-% der Komponente C
und optional 0,1 bis 20 Gew.-%, bevorzugt 0,2 bis 15 Gew.-% Polymeradditive als Komponente D.

In bevorzugter Ausfiihrungsform besteht die Formmasse zu mindestens 90 Gew.-%, weiter bevorzugt zu mindestens 95 Gew.-% und am meisten bevorzugt zu 100 Gew.-% aus den Komponenten A, B, C und D.

In bevorzugter Ausfiihrungsform beträgt der Polybutadiengehalt der Formmasse 2 bis 7 Gew.-%.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 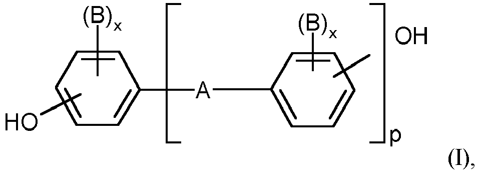 wobei
A eine Einfachbindung, C₁ bis Cs-Alkylen, C₂ bis Cs-Alkyliden, C₅ bis C₆-Cycloalkyliden, -O-, -SO-, -CO-, -S-, -SOz-, C₆ bis C₁₂-Arylen, an das weitere aromatische gegebenenfalls Heteroatome enthaltende Ringe kondensiert sein können,
   oder ein Rest der Formel (II) oder (III) 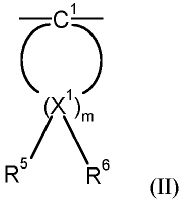 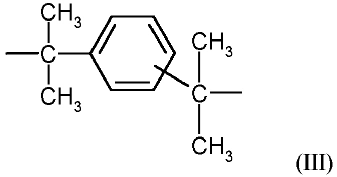
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α,-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}, gemessen durch GPC (Gelpermeationschromatographie) mit Polycarbonatstandard auf Basis Bisphenol A) von bevorzugt 20000 bis 40000 g/mol, weiter bevorzugt 22000 bis 32000 g/mol, besonders bevorzugt 24000 bis 30000 g/mol. Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat auf Basis von Bisphenol A eingesetzt.

### Komponente B

Die erfindungsgemäß als Komponente B einsetzbaren, kautschukmodifizierten Vinyl(co)polymerisate enthält die Komponenten B1 und optional B2. Das Gewichtsverhältnis der Komponenten B1 zu B2 beträgt mindestens 5:1, bevorzugt mindestens 10: 1, weiter bevorzugt 10:1 bis 30: 1.

### B1

Bei der Komponente B1 handelt es sich um ein erstes kautschukmodifiziertes Vinyl(co)polymerisat, bevorzugt hergestellt im Masse-Polymerisationsverfahren,
- welches eine disperse Phase aus mit Vinylmonomeren B1.1 gepfropfte Polybutadien-haltigen Kautschukpartikeln mit Inklusionen aus Vinyl(co)polymerisat bestehend aus den Vinylmonomeren B1.1 und eine nicht an die Kautschukpartikel gebundene und nicht in die Kautschukpartikel eingeschlossene kautschukfreie Vinyl(co)polymerisat-Matrix bestehend aus den Vinylmonomeren B 1.1 enthält,
- wobei die Vinyl(co)polymerisat-Inklusionen enthaltenden Kautschukpartikel bevorzugt einen mittleren Partikeldurchmesser D50 gemessen per Ultrazentrifugation von 0,3 bis 10,00 µm, weiter bevorzugt von 0,5 bis 1,5 µm, insbesondere von 0,7 bis 1,0 µm aufweisen,
- welches einen Polybutadiengehalt von bevorzugt 5 bis 20 Gew.-%, weiter bevorzugt von 7 bis 15 Gew.-%, insbesondere von 8 bis 13 Gew.-% aufweist.

Bei der Komponente B1 kann es sich auch um Mischungen von kautschukmodifizierten Vinyl(co)polymerisaten handeln, die jeweils die oben genannten Bedingungen erfüllen.

Die kautschukmodifizierten Vinyl(co)polymerisate gemäß Komponente B1 weisen eine Schmelzeflussrate (MFR), gemessen gemäß ISO 1133 (Version von 2012) bei 220°C mit einer Stempellast von 10 kg, von bevorzugt 2 bis 15 g/10min, besonders bevorzugt 3 bis 10 g/10min, insbesondere 4 bis 8 g/10min auf.

Derartige kautschukmodifizierte Vinyl(co)polymerisate B1 werden hergestellt durch Polymerisation von
B1.1) vorzugsweise 80 bis 95 Gew.-%, besonders bevorzugt 83 bis 93 Gew.-%, weiter bevorzugt 85 bis 92 Gew.-%, bezogen auf das kautschukmodifizierte Vinyl(co)polymerisat B1, wenigstens eines Vinylmonomeren in Anwesenheit von
B1.2) vorzugsweise 5 bis 20 Gew.-%, besonders bevorzugt 7 bis 17 Gew.-%, weiter bevorzugt 8 bis 15 Gew.-%, bezogen auf das kautschukmodifizierte Vinyl(co)polymerisat B 1, einer oder mehrerer kautschukelastischer Polybutadien-haltiger Pfropfgrundlagen mit Glasübergangstemperaturen < -50°C, weiter bevorzugt von < -60°C, besonders bevorzugt < -70°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Bei der zur Herstellung des kautschukmodifizierten Vinyl(co)polymerisats B1 bevorzugt angewandten Massepolymerisations-Reaktion erfolgt sowohl die Polymerisation der Vinylmonomeren gemäß B1.1 als auch eine Pfropfung des so entstehenden Vinyl(co)polymers auf die kautschukelastische Pfropfgrundlage gemäß B12. Des Weiteren erfolgt bei dieser Reaktionsführung durch Selbstorganisation (Phasenseparation) die Ausbildung einer kautschukhaltigen Phase enthaltend ebenso phasenseparierte Inklusionen (Einschlüsse) aus Vinyl(co)polymerisat bestehend aus den Monomeren gemäß B1.1, wobei diese kautschukhaltige Phase in einer Vinyl(co)polymerisat-Matrix aufgebaut aus den Monomeren gemäß B1.1 dispergiert vorliegt. Unter den Inklusionen wird verstanden, dass Vinyl(co)polymerisat im Inneren der Kautschukpartikel eingebettet ist. Das Vinyl(co)polymerisat kann dabei chemisch an die kautschukelastische Pfropfgrundlage gebunden sein oder in Form von nicht angebundenen Polymerketten eingeschlossen vorliegen. Das eingeschlossene Vinyl(co)polymerisat lässt sich durch übliche Lösungsmittel wie Aceton nicht herauslösen.

Die Größe der Kautschukpartikel in den so hergestellten kautschukmodifizierten Vinyl(co)polymerisaten B1 wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B1.1 sind vorzugsweise Gemische aus
B1.1.1) 65 bis 85 Gew.-Teilen, besonders bevorzugt 70 bis 80 Gew.-Teilen, weiter bevorzugt 74 bis 78 Gew.-Teilen, jeweils bezogen auf die Summe aus B1.1.1 und B1.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
B1.1.2 ) 15 bis 35 Gew.-Teilen, besonders bevorzugt 20 bis 30 Gew.-Teilen, weiter bevorzugt 22 bis 26 Gew.-Teilen, jeweils bezogen auf die Summe aus B1.1.1 und B1.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B1.1.1 sind ausgewählt aus mindestens einem der Monomere Styrol, α-Methylstyrol und Methylmethacrylat. Bevorzugte Monomere B1.1.2 sind ausgewählt aus mindestens einem der Monomere Acrylnitril, Butylacrylat, Maleinsäureanhydrid und Methylmethacrylat. Besonders bevorzugte Monomere sind B1.1.1 Styrol und B1.1.2 Acrylnitril.

In einer weiteren bevorzugten Ausfuhrungsform ist B1.1.1 Styrol und B1.1.2 eine Mischung aus Acrylnitril und Butylacrylat.

In dieser Ausfuhrungsform werden bevorzugt
65 bis 80 Gew.-%, bevorzugt 67 bis 75 Gew.-%, bezogen auf Komponente B1.1, Styrol,
15 bis 30 Gew.-%, bevorzugt 20 bis 28 Gew.-%, bezogen auf Komponente B1.1, Acrylnitril und 2 bis 8 Gew.-%, bevorzugt 3 bis 6 Gew.-%, bezogen auf Komponente B1.1, Butylacrylat eingesetzt.

Wie oben beschrieben, kann es sich bei der Komponente B1 auch um Mischungen zweier oder mehrerer kautschukmodifizierter Vinyl(co)polymerisate handeln. Dabei werden in einer bevorzugten Ausfuhrungsform Mischungen aus zwei kautschukmodifizierten Vinyl(co)polymerisaten eingesetzt. Weiter bevorzugt ist es dabei, dass dem ersten dieser kautschukmodifizierten Vinyl(co)polymerisate als B.1.1.1 Styrol und als B1.1.2 Acrylnitril eingesetzt wird, während bei dem zweiten kautschukmodifizierten Vinyl(co)polymerisat als B.1.1.1 Styrol und als B1.1.2 eine Mischung aus Acrylnitril und Butylacrylat eingesetzt wird.

Das Gewichtsverhältnis des ersten kautschukmodifizierten Vinyl(co)polymerisat zum zweiten kautschukmodifizierten Vinyl(co)polymerisat beträgt bevorzugt 1:1 bis 10: 1, weiter bevorzugt 2:1 bis 8: 1.

Bevorzugte Pfropfgrundlagen B1.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B1.1.1 und B1.1.2).

Besonders bevorzugt als Pfropfgrundlage B1.2 ist reiner Polybutadienkautschuk. In einer weiteren bevorzugten Ausfuhrungsform handelt es sich bei B1.2 um Styrol-Butadien-Blockcopolymer-Kautschuk.

### B2

Die kautschukmodifizierten Vinyl(co)polymerisate gemäß Komponente B können optional weitere mit Vinylmonomeren gepfropfte Kautschukpartikel (Pfropfpolymerisate) B2 mit einem kautschukelastischen Kern und einer Vinyl(co)polymerisat-Hülle, bevorzugt im EmulsionsPolymerisationsverfahren hergestellt, enthalten.

Erfindungsgemäß derartig als Bestandteil von Komponente B2 einsetzbare Pfropfpolymerisate mit einem kautschukelastischen Kern und einer Vinyl(co)polymerisat-Hülle sind ein oder mehrere Pfropfpolymerisate hergestellt durch Pfropfung von
B2.1) 5 bis 75 Gew.-%, bevorzugt 10 bis 60 Gew.-%, besonders bevorzugt 25 bis 50 Gew.-%, bezogen auf das Pfropfpolymerisat B2, wenigstens eines Vinyl-monomeren auf
B2.2) 25 bis 95 Gew.-%, bevorzugt 40 bis 90 Gew.-%, besonders bevorzugt von 50 bis 75 Gew.-%, bezogen auf das Pfropfpolymerisat B2, einer oder mehrerer kautschukelastischer Pfropfgrundlagen.

Die Pfropfgrundlagen B2.2 besitzen vorzugsweise Glasübergangstemperaturen < -30°C, weiter bevorzugt von < -50°C, besonders bevorzugt < -70°C.

Die Pfropfgrundlage B2.2 der Pfropfpolymerisate B2 hat im allgemeinen eine mittlere Teilchengröße (D50-Wert) von 0,05 bis 1,00 µm, vorzugsweise 0,10 bis 0,7 µm, weiter bevorzugt 0,15 bis 0,5 µm, und besonders bevorzugt von 0,2 bis 0,4 µm.

Die für die Pfropfpolymerisate B2 verwendeten Monomere B2.1 sind vorzugsweise Gemische aus
B2.1.1) 50 bis 90 Gew.-Teilen, besonders bevorzugt 70 bis 80 Gew.-Teilen, jeweils bezogen auf die Summe aus B2.1.1 und B2.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
B2.1.2) 10 bis 50 Gew.-Teilen, besonders bevorzugt 20 bis 30 Gew.-Teilen, jeweils bezogen auf die Summe aus B2.1.1 und B2.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B2.1.1 für die Pfropfpolymerisate B2 sind ausgewählt aus mindestens einem der Monomere Styrol, α-Methylstyrol und Methylmethacrylat, bevorzugte Monomere B2.1.2 sind ausgewählt aus mindestens einem der Monomere Acrylnitril, Maleinsäureanhydrid und Methylmethacrylat. Besonders bevorzugte Monomere sind B2.1.1 Styrol und B2.1.2 Acrylnitril oder B2.1.1 Styrol und B2.1.2 Methylmethacrylat oder B2.1.1 = B2.1.2 Methylmethacrylat.

Als Pfropfgrundlage B2.2 der Pfropfpolymerisate B2 eignen sich beispielsweise Dienkautschuke, EP(D)M-Kautschuke, also solche auf Basis Ethylen/Propylen und gegebenenfalls Dienen, Acrylat-, Polyurethan-, Silikon-, Chloropren-, Ethylen/Vinylacetat- sowie Acrylat-Silikon-Komposit-Kautschuke.

Bevorzugte Pfropfgrundlagen B2.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B2.1.1 und B2.1.2) oder Gemische aus einer oder mehrerer der zuvor genannten Komponenten.

Besonders bevorzugt als Pfropfgrundlage B2.2 für die Pfropfpolymerisate B2 ist reiner Polybutadienkautschuk. In einer weiteren bevorzugten Ausfuhrungsform handelt es sich bei B2.2 um Styrol-Butadien-Kautschuk, besonders bevorzugt um Styrol-Butadien-Blockcopolymer-Kautschuk. Besonders geeignete Pfropfpolymerisate B2 sind beispielsweise ABS-Polymerisate, in bevorzugter Ausfuhrungsform solche, die im Emulsionspolymerisationsverfahren durch Redox-Initiierung mit einem Initiatorsystem aus organischem Hydroperoxid und Ascorbinsäure gemäß US-P 4 937 285 hergestellt werden.

Besonders bevorzugte kautschukmodifizierte Vinyl(co)polymerisate gemäß Komponente B sind beispielsweise ABS-Polymerisate (Emulsions-, Masse- und Suspensions-ABS), wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die kautschukmodifizierten Vinyl(co)polymerisate gemäß Komponente B enthalten freies, d.h. nicht an die Kautschukgrundlage(n) B1.2 bzw. B2.2 chemisch gebundenes und nicht in den Kautschukpartikeln eingeschlossenes Vinyl(co)polymerisat bestehend aus den Monomeren gemäß B1.1 oder B2.1. Dieses kann herstellungsbedingt bei der Polymerisation der Pfropfpolymerisate B1 bzw. B2 entstehen oder aber separat polymerisiert und der Komponente B zugemischt werden. Ebenso ist es möglich, dass ein Teil des freien Vinyl(co)polymerisats im kautschukmodifizierten Vinyl(co)polymerisat gemäß Komponente B herstellungsbedingt aus den Polymeren B1 bzw. B2 selbst stammt und ein anderer Teil separat polymerisiert und der Komponente B zugesetzt wurde. Der Anteil des freien Vinyl(co)polymerisats (unabhängig von dessen Ursprung), gemessen als in Aceton löslicher Anteil, in der Komponente B beträgt, bezogen auf die Komponente B, bevorzugt mindestens 20 Gew.-%, besonders bevorzugt mindestens 30 Gew.-%.

Dieses freie Vinyl(co)polymerisat weist in den kautschukmodifizierten Vinyl(co)polymerisaten gemäß Komponente B ein gewichtgemitteltes Molekulargewicht Mw 70 bis 250 kg/mol, bevorzugt von 140 bis 200 kg/mol, insbesondere von 150 bis 180 kg/mol auf.

Das gewichtsgemittelte Molekulargewicht Mw des freien Vinyl(co)polymerisats in Komponente B wird im Rahmen der vorliegenden Erfindung per Gelpermeationschromatographie (GPC) in Tetrahydrofuran gegen Polystyrol als Standard gemessen.

### Komponente C

Bei der Komponente C handelt es sich um ein Masterbatch eines Stick-Slip Modifikators enthaltend
C1) ein oder mehrere thermoplastische organische Materialien
C2) ein vulkanisiertes Silikonelastomer

Ein Masterbatch ist ein Zusatzstoff für Polymere, um diesen bestimmte Eigenschaften zu verleihen. Dabei wird ein Additiv als eigentlicher Wirkstoff in hoher Konzentration in ein Trägerharz in der Wärme eingekapselt. Nach Abkühlung des Trägerharzes erfolgt meist eine Granulierung, um eine leicht dosierbare Form zu erhalten. So können Additive, die etwa flüssig und daher allein schwierig in ein Polymer eingebracht werden können, dann in einfacher Weise zugemischt werden.

In der Komponente C ist die Komponente C1 dieses Trägerharz. Bei der Komponente C1 handelt es sich um ein Copolymer enthaltend Struktureinheiten abgeleitet von einem Olefin und Struktureeinheiten abgeleitet von einem polaren Co-Monomeren. Als Olefin sind besonders Ethylen und Propylen geeignet und als Co-Monomere sind Acrylsäure, Acrylsäureester, Methacrylsäureester und Vinylacetat besonders bevorzugt. Es können auch Mischungen solcher Polyolefin-Copolymere eingesetzt werden.

Ein besonders geeignetes Trägerharz (C1) ist Elvaloy^{™} AC 1609 (Dupont), bei dem es sich um ein Ethylenacrylat-Copolymer handelt.

Der Anteil der Komponente C 1 beträgt 40 bis 80 Gew.-%, bezogen auf die Komponente C.

Ein Polysiloxan enthält mehrere Si-O-Si-Bindungen, die eine Polymerkette bilden, wobei das Grundgerüst der Polymerkette aus - (Si-O) - Wiederholungseinheiten besteht.

Ein Organopolysiloxan enthält sich wiederholende (Si-O) -Einheiten, bei denen mindestens ein Si-Atom mindestens eine organische Gruppe, d.h. mindestens ein Kohlenstoffatom enthaltend, trägt.

Ein Silan ist eine Verbindung abgeleitet von Si-H₄ und enthält oft mindestens eine Si-C Bindung. Sofern nicht anders angegeben, enthält ein Silan nur ein Si Atom.

Ein Polysiloxan umfasst Endgruppen und Seitengruppen. Eine Endgruppe ist eine chemische Gruppe, die sich an einem Si-Atom befindet, das sich an einem Ende der Polymerkette befindet. Eine Seitengruppe ist eine Gruppe, die sich an einem Si-Atom befindet, wobei sich das Si-Atom nicht am Ende der Polymerkette befindet. Typischerweise enthält ein Organopolysiloxan eine Mischung der folgenden Strukturen: 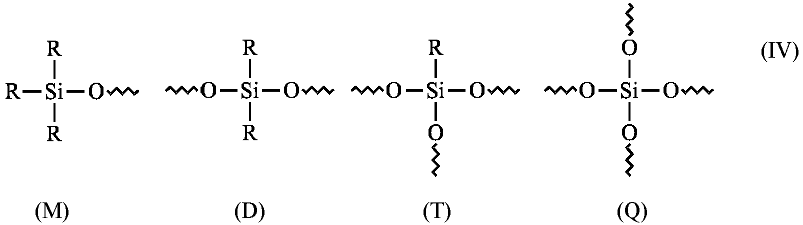 wobei M, D, T und Q unabhängig voneinander die Funktionalität struktureller Gruppen von Organopolysiloxan darstellen. Insbesondere stellt M eine monofunktionelle Gruppe RsSiO _{1/2} dar; D stellt eine difunktionelle Gruppe R2Si0_{2 /2} dar; T stellt eine trifunktionelle Gruppe RSi0_{3 /2} dar; und Q stellt eine tetrafunktionelle Gruppe SO_{4/2} dar. So haben beispielsweise lineare Organopolysiloxane ein Grundgerüst von D-Einheiten und die Endgruppen sind M-Einheiten, und verzweigte Organopolysiloxane können beispielsweise ein Grundgerüst von D-Einheiten aufweisen, die mit T- und / oder Q-Einheiten durchsetzt sind.

Eine Vernetzungsreaktion ist eine Reaktion, bei der zwei oder mehr Moleküle, wobei mindestens eines der Moleküle ein Polymer ist, miteinander verbunden werden, um das Polymer zu härten.

Ein Vernetzer ist eine Verbindung, die eine Vernetzungsreaktion eines Polymers erzeugen kann. Das Verfahren, bei dem das Elastomer und die thermoplastische Matrix vermischt werden und das Elastomer mit Hilfe eines Vernetzers (oder Katalysators) während des Mischprozesses gehärtet wird, ist als dynamische Vulkanisation bekannt. Der daraus resultierende Blend, bestehend aus einem thermoplastischen Matrix und einem vernetzten (vulkanisierten) Elastomer, wird als thermoplastische Vulkanisat bezeichnet. Handelt es sich bei der vernetzten (vulkanisierten) elastomeren Komponente um ein Silikonpolymer, während die thermoplastische Komponente ein organisches Nicht-Silikonpolymer ist, spricht man von einem thermoplastischen Silikonvulkanisat.

Das vulkanisierte Silikonelastomer (C2) kann durch Härten einer der folgenden Zusammensetzungen hergestellt werden:
Ein Diorganopolysiloxan mit durchschnittlich mindestens zwei Alkenylgruppen pro Molekül (C2al) und entweder
(i) ein Organopolysiloxan mit mindestens zwei Si-gebundenen Wasserstoffatomen, alternativ mindestens drei Si-gebundenen Wasserstoffatomen pro Molekül (C2a2) und einem Hydrosilylierungskatalysator (C2a3) und gegebenenfalls einem Katalysatorinhibitor (C2a5); oder
(ii) einen Radikalinitiator (C2a4).

Alternativ kann das vulkanisierte Silikonelastomer (C2) durch Härten einer Zusammensetzung hergestellt werden, umfassend
ein Silanol-terminiertes Diorganopolysiloxan (C2bl),
Organopolysiloxan mit mindestens zwei Si-gebundenen Wasserstoffatomen, alternativ mindestens drei Si-gebundene Wasserstoffatome pro Molekül (C2a2) und
ein Kondensationskatalysator (C2b3).

Der Anteil der Komponente C2 beträgt bevorzugt 20 bis 60 Gew.-%, bezogen auf die Komponente C.

### Diorganopolysiloxan mit durchschnittlich mindestens zwei Alkenylgruppen pro Molekül (C2al)

Die an Silizium gebundenen organischen Gruppen der Komponente (C2al) werden unabhängig voneinander aus Kohlenwasserstoff- oder halogenierten Kohlenwasserstoffgruppen ausgewählt.

Diese können beispielsweise ausgewählt sein aus Alkylgruppen mit 1 bis 20 Kohlenstoffatomen wie Methyl, Ethyl, Propyl, Butyl, Pentyl und Hexyl sein; Cycloalkylgruppen wie Cyclohexyl und Cycloheptyl; Alkenylgruppen mit 2 bis 20 Kohlenstoffatomen wie Vinyl, Allyl und Hexenyl; Arylgruppen mit 6 bis 12 Kohlenstoffatomen wie Phenyl, Tolyl und Xylyl; Aralkylgruppen mit 7 bis 20 Kohlenstoffatomen wie Benzyl und Phenethyl; und halogenierte Alkylgruppen mit 1 bis 20 Kohlenstoffatomen, wie 3,3,3-Trifluorpropyl und Chlormethyl.

Diese Gruppen sind so ausgewählt, dass das Diorganopolysiloxan eine Glasübergangstemperatur (oder einen Schmelzpunkt) aufweist, die unter Raumtemperatur liegt, so dass diese Komponente beim Aushärten ein Elastomer bildet.

Bevorzugt handelt es sich bei den an Silizium gebundenen organischen Gruppen in Komponente (C2al) zu mindestens 85, weiter bevorzug zu mindestens 90 Mol-% um Methylgruppen.

Somit kann Polydiorganosiloxan (C2al) ein Homopolymer, ein Copolymer oder ein Terpolymer sein, das solche organischen Gruppen enthält. Beispiele umfassen Silikonflüssigkeiten oder Silikongummis, umfassend Dimethylsiloxyeinheiten, Dimethylsiloxyeinheiten und Phenylmethylsiloxyeinheiten; Dimethylsiloxyeinheiten und Diphenylsiloxyeinheiten; und Dimethylsiloxyeinheiten, Diphenylsiloxyeinheiten und Phenylmethylsiloxyeinheiten unter anderem. Die Molekülstruktur ist ebenfalls nicht kritisch und es kann sich um lineare und/oder teilweise verzweigte Strukturen handeln, wobei lineare Dimethylsiloxyeinheiten bevorzugt sind. Beispielsweise seien genannt α,ω-Vinyldimethylsiloxy Polydimethylsiloxan, ein α,ω Vinyldimethylsiloxy-Copolymer von Methylvinylsiloxan- und Dimethylsiloxan-Einheiten und / oder ein α,ω -Trimethylsiloxy-Copolymer von Methylvinylsiloxan und Dimethylsiloxan-Einheiten.

Das Diorganopolysiloxanpolymer (C2al) kann eine Viskosität von mindestens 100 000 mm²·s⁻¹(cSt) bei 25 °C, typischerweise jedoch von mindestens 1000000 mm²-s⁻¹ (cSt) bei 25 °C aufweisen, gemessen unter Verwendung eines AR 2000 Rheometer von TA Instruments aus New Castle, DE, USA oder eines geeigneten Brookfield-Viskosimeter mit der für die zu messende Viskosität am besten geeigneten Spindel. Das Diorganopolysiloxanpolymer (C2al) kann ein unvulkanisiertes Silikongummi (Silikonkautschuk) sein, das durch einen Williams-Plastizitätswert von mindestens 100 mm / 100 gekennzeichnet ist, gemessen gemäß ASTM D-926-08 unter Verwendung eines Williams-Parallelplattenplastimeters,. Eine Alternative zur Verwendung von Williams-Plastizitätsgummis kann auch gemäß ASTM D2240 - 03 anhand ihrer Shore A-Härte bewertet werden, wobei die Werte typischerweise mindestens 30 betragen. Das Diorganopolysiloxanpolymer (C2al) kann, mit einer kleinen Menge eines nicht reaktiven Silikons wie einem Trimethylsilylterminierten Polydimethylsiloxan modifiziert werden. In einer Alternative ist das Diorganopolysiloxanepolymer (C2al) ein unvulkanisiertes Silikongummi.

### Organopolysiloxan mit mindestens zwei Si-gebundenen Wasserstoffatomen, alternativ mindestens drei Si-gebundenen Wasserstoffatomen pro Molekül (C2a2)

Das Organopolysiloxan mit mindestens zwei Si-gebundenen Wasserstoffatomen, alternativ mindestens drei Si-gebundenen Wasserstoffatomen pro Molekül (C2a2) kann beispielsweise ein Organosiliziumharz mit niedrigem Molekulargewicht oder ein kurz- oder langkettiges Organosiloxanpolymer sein, welches linear oder zyklisch sein kann. Die an Silizium gebundenen organischen Gruppen der Komponente (C2a2) sind unabhängig ausgewählt aus einer der oben in Verbindung mit Diorganopolysiloxan (C2al und C2bl) beschriebenen Kohlenwasserstoff- oder halogenierten Kohlenwasserstoffgruppen, einschließlich bevorzugter Ausführungsformen davon. Die Molekülstruktur der Komponente (C2a2) ist ebenfalls nicht kritisch und es kann sich um lineare, teilweise verzweigte, , cyclische und Netzwerkstrukturen handeln, wobei lineare Polymere oder Copolymere bevorzugt werden, und diese Komponente sollte beim Härten der Komponenten (C2al) und (C2bl) wirksam sein.

(C2a2) hat vorzugsweise mindestens drei an Silizium gebundene Wasserstoffatome pro Molekül, die in der Lage sind, mit dem Alkenyl oder anderen aliphatisch ungesättigten Gruppen des Diorganopolysiloxanpolymers (C2al) und den -OH-Gruppen von (C2bl) zu reagieren. Die Position des an Silizium gebundenen Wasserstoffs in der Komponente (C2a2) ist nicht kritisch, d. h. die Si-H-Gruppen können terminale Gruppen oder seitliche Gruppen in nicht-terminalen Positionen entlang der Molekülkette oder an beiden Positionen sein. Um die Vernetzung sicherzustellen, wenn (C2a2) nur zwei Si-H-Bindungen aufweist, muss mindestens ein Teil des jeweiligen Polymers (C2al) oder (C2bl) mindestens drei Gruppen aufweisen, mit denen (C2a2) -Moleküle reagieren können. Das Organopolysiloxan mit mindestens zwei Si-gebundenen Wasserstoffatomen, alternativ mindestens drei Si-gebundenen Wasserstoffatomen pro Molekül (C2a2) kann beispielsweise die allgemeine Formel aufweisen: R³R⁴₂SiO (R⁴₂SiO)ₚ(R⁴HSiO)_{q}SiR⁴₂R³ oder 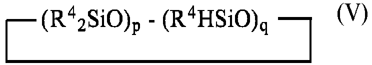 worin R⁴ eine Alkyl- oder Arylgruppe mit bis zu 10 Kohlenstoffatomen bezeichnet und R³ eine Gruppe R⁴ oder ein Wasserstoffatom bezeichnet, p einen Wert von 0 bis 20 hat und q einen Wert von 1 bis 70 hat und wobei pro Molekül mindestens 2 oder 3 siliziumgebundene Wasserstoffatome vorhanden sind. R⁴ kann beispielsweise eine Niederalkylgruppe mit 1 bis 3 Kohlenstoffatomen sein, wie beispielsweise eine Methylgruppe. Das Organopolysiloxan mit mindestens zwei Si-gebundenen Wasserstoffatomen, alternativ mindestens drei Si-gebundenen Wasserstoffatomen pro Molekül (C2a2) kann beispielsweise bei 25 °C eine Viskosität von 0,5 bis 1000 mm²·s⁻¹ (cSt) aufweisen, bevorzugt 2 bis 100 mm²·s⁻¹ (cSt) weiter bevorzugt 5 bis 60 mm²·s⁻¹ (cSt) bei 25 °C, typischerweise gemessen mit einem Brookfield-Viskosimeter und der am besten geeigneten Spindel für den gemessenen Viskositätsbereich. Der durchschnittliche Polymerisationsgrad von (C2a2) kann beispielsweise im Bereich von 30 bis 400 Siloxaneinheiten pro Molekül liegen.

Die Komponente (C2a2) kann durch die folgenden Siloxane veranschaulicht werden, die typischerweise eine Viskosität von 0,5 bis 1000 mm²·s⁻¹ (cSt) bei 25°C aufweisen:
niedermolekularen Siloxane, wie PhSi(OSiMe₂H)₃;
Trimethylsiloxy-endblockierte Methylhydridopolysiloxane;
Trimethylsiloxy-endblockierte Dimethylsiloxan-Methylhydridosiloxan-Copolymere;
Dimethylhydridosiloxy-endblockierte Dimethylpolysiloxane;
Dimethylhydrogensiloxy-endblockierte Methylhydrogenpolysiloxane;
Dimethylhydridosiloxy-endblockierte Dimethylsiloxan-Methylhydridosiloxan-Copolymere;
cyclische Methylhydrogenpolysiloxane;
cyclische Dimethylsiloxan-Methylhydridosiloxan-Copolymere;
Tetrakis (dimethylhydrogensiloxy) silan;
Silikonharze bestehend aus (CH3)₂ HSiOi /2 , (C_{3/4}) 3 SiOi /2 - und Si04/2-Einheiten; und
Silikonharze bestehend aus (C3/4)2 HSiOi /2, (CH3)3 SiOi /2, CH3 Si03/ 2, PhSi03 /2 und Si04/2 Einheiten.

(C2a2) kann eine Mischung aus mehr als einem dieser Materialien umfassen.

Das Molverhältnis von Si-H-Gruppen in (C2a2) zu aliphatisch ungesättigten Gruppen im Diorganopolysiloxanpolymer (C2al) beträgt vorzugsweise mindestens 1: 1 und kann bis zu 8: 1 oder 10: 1 betragen. Bevorzugt liegt das Molverhältnis von Si-H-Gruppen zu aliphatisch ungesättigten Gruppen im Bereich von 1,5: 1 bis 5: 1.

(C2a2) wird in einer Menge verwendet, so dass das Molverhältnis von Si-H darin zu Si-OH in Komponente (C2bl) etwa 0,5 bis 10 beträgt, vorzugsweise 1 bis 5 und am meisten bevorzugt etwa 1,5.

Diese Si-H-funktionellen Materialien sind auf dem Fachgebiet gut bekannt und viele kommerziell erhältlich.

### Hydrosilylierungskatalysator (C2a3)

Der Hydrosilylierungskatalysator (C2a3) ist vorzugsweise ein Metall der Platingruppe (Platin, Ruthenium, Osmium, Rhodium, Iridium und Palladium) oder eine Verbindung davon.

Bevorzugt sind Platin und / oder Platinverbindungen, beispielsweise fein pulverisiertes Platin; eine Chlorplatinsäure oder eine Alkohollösung einer Chlorplatinsäure; ein Olefinkomplex einer Chlorplatinsäure; ein Komplex aus einer Chlorplatinsäure und einem Alkenylsiloxan; ein Platin-Diketon-Komplex; metallisches Platin auf Siliciumdioxid, Aluminiumoxid, Kohlenstoff oder einem ähnlichen Träger; oder ein thermoplastisches Harzpulver, das eine Platinverbindung enthält.

Der Katalysator (C2a3) wird vorzugsweise in einer Menge von 0,5 bis 100 ppm (auf Gewicht bezogen) Metall der Platingruppe auf der Basis der Polyorganosiloxanzusammensetzung (C) verwendet, weiter bevorzugt 1 bis 50 ppm. Der Hydrosilylierungskatalysator (C2a3) katalysiert die Reaktion der Alkenylgruppen des Diorganopolysiloxanpolymers (C2al) mit den Si-H-Gruppen von (C2a2).

### Inhibitor (C2a5)

Wenn ein Hydrosilylierungskatalysator zum Härten des Diorganopolysiloxanpolymers (C2al) verwendet wird, kann optional ein Inhibitor (C2a5) in der Zusammensetzung enthalten sein, um den Härtungsprozess zu verzögern. Mit dem Begriff "Inhibitor" ist hierin ein Material gemeint, das die Aushärtung der Komponente (C2al) verzögert, wenn es in kleinen Mengen, wie beispielsweise weniger als 10 Gewichtsprozent bezogen auf die Siloxanzusammensetzung von (C2al), eingearbeitet wird, ohne die Gesamtaushärtung der Mischung zu verhindern.

Inhibitoren von Katalysatoren auf Platingruppenbasis (C2a5), insbesondere Katalysatoren auf Platinbasis (C2a5), sind bekannt. Dazu gehören Hydrazine, Triazole, Phosphine, Mercaptane, organische Stickstoffverbindungen, Acetylenalkohole, silylierte Acetylenalkohole, Maleate, Fumarate, ethylenisch oder aromatisch ungesättigte Amide, ethylenisch ungesättigte Isocyanate, olefinische Siloxane, ungesättigte Kohlenwasserstoffmonoester und -diestere, Nitrile und Diaziridine.

Bevorzugt ist der Inhibitor (C2a5) ausgewählt aus der Gruppe bestehend aus 1 Ethinyl-1-cyclohexanol, 2-Methyl-3-butin-2-ol, 3-Butin-1-ol, 3-Butin-2-ol, Propargylalkohol, 2-Phenyl-2-propin-1-ol, 3,5-Dimethyl-1-hexyn-3-ol, 1-Ethinylcyclopentanol, 1-Phenyl-2-propynol und Gemische davon.

Der Inhibitor (C2a5) kann im Bereich von 0 bis 10 Gew.-% bezogen auf die Komponente (C2), bevorzugt 0,05 bis 5 Gew.-% der Komponente (C2) zugesetzt werden, wird jedoch im allgemeinen in einer Menge verwendet, die ausreicht, um die Aushärtung des Diorganopolysiloxans (C2al) zu verzögern. Diese Menge kann durch Routineexperimente für ein gegebenes System optimiert werden.

### Radikalstarter (C2a4)

Der Radikalinitiator (C2a4) ist eine Verbindung, die sich bei erhöhter Temperatur unter Bildung von Radikalspezies zersetzt. Letzteres fördert die Vernetzungsreaktion zwischen den Alkenylgruppen von Diorganopolysiloxanen (C2al) während des dynamischen Vulkanisationsschritts des vorliegenden Verfahrens. Diese Komponente ist beispielsweise auswählt aus Azoverbindungen, Kohlenstoffverbindungen und organischen Peroxyverbindungen wie Hydroperoxide, Diacylperoxide, Ketonperoxide, Peroxyester, Dialkylperoxide, Diarylperoxide, Arylalkylperoxide, Peroxydicarbonate, Peroxyketale, Peroxysäuren, Acylalkyle und Alkylmonoperoxydicarbonate.

Für die Zwecke der vorliegenden Erfindung wird der Radikalinitiator (C2a4) so ausgewählt, dass die Differenz zwischen der sechsminütigen Halbwertszeit des Initiators und der Prozesstemperatur zwischen -60 °C und 20 °C liegt. Die folgende Bedingung ist erfüllt: -60 °C < {T (6) -T (0)} ≤ = 20 °C, wobei T (6) die Temperatur (°C) darstellt, bei der der Initiator eine Halbwertszeit hat von 6 Minuten und T (0) die Verarbeitungstemperatur (°C) vor der Initiatorzugabe repräsentiert (d.h. die tatsächliche Temperatur des Gemisches der Komponenten (Cl) bis (C2)). Der Wert von T (6) ist beim Hersteller des Initiators erhältlich oder kann durch auf dem Fachgebiet bekannte Verfahren bestimmt werden. Nach dem Einbringen des Initiators steigt die Temperatur im Allgemeinen leicht an, wenn eine dynamische Vulkanisation stattfindet, sofern nicht absichtlich gekühlt wird. Eine solche Kühlung ist jedoch im Allgemeinen nicht erforderlich, es sei denn, die Temperatur steigt dramatisch an (z. B. mehr als etwa 30 °C).

Beispiele für geeignete Radikalinitiatoren umfassen 2,2'-Azobisisobutyronitril, 2,2'-Azobis (2-methylbutyronitril), Dibenzoylperoxid, tert-Amylperoxyacetat, 1,4-Di (2-tert-butylperoxyisopropyl) benzol, tert -Butylcumylperoxid, 2,4,4-Trimethylpentyl-2-hydroperoxid, Diisopropylbenzolmonohydroperoxid, Cumylhydroperoxid, tert-Butylhydroperoxid, tert-Amylhydroperoxid, 1, 1-Di (tert-butylperoxy) cyclohexan, tert-Butylperoxy) cyclohexan, tert-Butylperoxy) Peroxybenzoat, Dicumylperoxid, 2,5-Dimethyl-2,5-di- (tert-butylperoxy) hexan-bis (1-methyl-1phenylethyl) peroxid, 2,5-Dimethyl-2,5-di- (tert-butylperoxy) Hexin-3, di-tert-butylperoxid, α, α-Dimethylbenzylhydroperoxid und 3,4-Dimethyl-3,4-diphenylhexan.

Der Initiator (C2a4) wird in einer Menge verwendet, die ausreicht, um das Diorganopolysiloxan (C2al) zu härten, und diese Menge durch Routineexperimente für ein gegebenes System optimiertwird.

Wenn die Menge zu gering ist, findet eine unzureichende Vernetzung statt und die mechanischen Eigenschaften sind schlecht. Wenn andererseits überschüssiger Initiator zugesetzt wird, treten unwirtschaftliche und unerwünschte Nebenreaktionen wie Polymerabbau auf. Der Initiator (C2a4) wird vorzugsweise in einer Menge von 0,05 bis 6 Gewichtsteilen, alternativ 0,2 bis 3 Gewichtsteilen pro 100 Gewichtsteile Diorganopolysiloxan (C2al) zugesetzt.

### Diorganopolysiloxan (C2bl)

Das Diorganopolysiloxan (C2bl) ist eine Silikonflüssigkeit oder ein Silikongummi, jeweils mit Silanol (d.h. -SiOH) -Gruppen terminiert und weist Viskosität von mindestens 100 000 mm²·s⁻¹ (cSt) bei 25 °C, bevorzugt mindestens 1000000 mm²·s⁻¹ (cSt) bei 25 °C auf. Die an Silizium gebundenen organischen Gruppen der Komponente (C2bl) werden unabhängig voneinander aus Kohlenwasserstoff- oder halogenierten Kohlenwasserstoffgruppen ausgewählt, wie oben für (C2al) definiert. Wiederum macht Methyl vorzugsweise mindestens 85, bevorzugter mindestens 90 Mol-% der an Silizium gebundenen organischen Gruppen in der Komponente (C2bl) aus.

Somit kann das Polydiorganosiloxan (C2bl) ein Homopolymer, ein Copolymer oder ein Terpolymer sein, das solche organischen Gruppen enthält. Beispiele umfassen Silikonflüssigkeiten oder Silikongummis , umfassend Dimethylsiloxyeinheiten und Phenylmethylsiloxyeinheiten; Dimethylsiloxyeinheiten und Diphenylsiloxyeinheiten; und Dimethylsiloxyeinheiten, Diphenylsiloxyeinheiten und Phenylmethylsiloxyeinheiten unter anderem. Die Molekülstruktur ist ebenfalls nicht kritisch und kann lineare oder teilweise verzweigt Strukturen aufweisen, wobei lineare Strukturen bevorzugt werden.

Spezifische Darstellungen von Organopolysiloxan (C2bl) umfassen: Dimethylhydroxysiloxy - endblockierte Dimethylsiloxan-Homopolymere;
Dimethylhydroxysiloxy-endblockierte Methylphenylsiloxan-Dimethylsiloxan-Copolymere und Dimethylhydroxysiloxy-endblockierte Methylphenylpolysiloxane. Bevorzugte Systeme für Niedertemperaturanwendungen umfassen silanol-funktionelle Methylphenylsiloxandimethylsiloxan-Copolymere und Diphenylsiloxan-Dimethylsiloxan-Copolymere, wobei der Molgehalt der Dimethylsiloxan-Einheiten bevorzugt etwa 93% beträgt.

Die Komponente (C2bl) kann auch aus Kombinationen von zwei oder mehr Organopolysiloxanflüssigkeiten oder -gummis bestehen. Am bevorzugtesten ist die Komponente (C2bl) ein Polydimethylsiloxan-Homopolymer, das an jedem Ende des Moleküls mit einer Silanolgruppe terminiert ist.

Vorzugsweise ist das Molekulargewicht des Diorganopolysiloxans ausreichend, um eine Williams-Plastizitätszahl von mindestens etwa 30 zu verleihen, wie durch ASTM D-926-08 bestimmt. Die Plastizitätszahl, wie sie hier verwendet wird, ist definiert als die Dicke in Millimetern × 100 eines zylindrischen Prüfkörpers mit einem Volumen von 2 cm³ und einer Höhe von ungefähr 10 mm, nachdem der Prüfling drei Minuten lang bei 25 °C einer Druckbelastung von 49 Newton ausgesetzt wurde. Obwohl es keine absolute Obergrenze für die Plastizität von (C2bl) gibt, schränkt die Verarbeitbarkeit in herkömmlichen Mischgeräten diesen Wert im Allgemeinen ein. Vorzugsweise sollte die Plastizitätszahl etwa 100 bis 200 betragen, am meisten bevorzugt etwa 120 bis 185. Solche unvernetzte Silikongummis können leicht in dem einen oder den mehreren thermoplastischen organischen Materialien (Cl) dispergiert werden, ohne dass ein Füllstoff (C2c) erforderlich ist.

Es wurde jedoch gefunden, dass flüssige Diorganopolysiloxane mit einer Viskosität von etwa 10 bis 100 Pa-s bei 25 °C oft nicht leicht in weiterem thermoplastischem Harz dispergiert werden können. Unter diesen Umständen muss die Flüssigkeit mit bis zu etwa 300 Gewichtsteilen Füllstoff (C2c), wie nachstehend beschrieben, für jeweils 100 Gewichtsteile (C2bl) gemischt werden, um die Dispersion zu erleichtern. Vorzugsweise werden die Flüssigkeit und der Füllstoff gemischt, bevor diese Kombination weiterem thermoplastischem Harz gegeben wird, diese können jedoch separat zugegeben werden.

### Kondensationskatalysator (C2b3)

Im Allgemeinen ist der Kondensationskatalysator (C2b3) der vorliegenden Erfindung eine beliebige Verbindung, die die Kondensationsreaktion zwischen den Si-OH-Gruppen von Diorganopolysiloxan (C2bl) und den Si-H-Gruppen des Organopolysiloxans mit mindestens zwei Si-gebundenen Wasserstoffatomen, bevorzugt mindestens drei Si-gebundene Wasserstoffatome pro Molekül (C2a2) fördert, um das Diorganopolysiloxan durch Bildung von -Si-O-Si-Bindungen zu härten. Der Katalysator (C2b3) kann jedoch keine Platinverbindung oder kein Komplex sein, da die Verwendung eines solchen Kondensationskatalysators häufig zu einer schlechten Verarbeitung sowie zu schlechten physikalischen Eigenschaften des resultierenden thermoplastischen Silikonvulkanisats führt.

Der Kondensationskatalysator (C2b3) liegt in einer Menge vor, die ausreicht, um das Diorganopolysiloxan (C2bl) und das Organopolysiloxan mit mindestens zwei, bevorzugt mindestens drei Si-gebundenen Wasserstoffatomen, (C2a2) wie oben definiert, zu härten .

Beispiele für geeignete Katalysatoren umfassen Metallcarboxylate wie Dibutylzinndiacetat, Dibutylzinndilaurat, Zinntripropylacetat, Zinnoctoat, Zinnoxalat, Zinnnaphthanat; Amine wie Triethylamin, Ethylentriamin; und quaternäre Ammoniumverbindungen, wie Benzyltrimethylammoniumhydroxid, Betahydroxyethylltrimethylammonium-2-ethylhexoat und Betahydroxyethylbenzyltrimethyldimethylammoniumbutoxid (siehe z. B. US 3,024,210).

### Optionaler Verstärkungsfüller (C2c)

Optional kann die zur Herstellung des vulkanisierten Silikonelastomers verwendete Zusammensetzung einen verstärkenden Füllstoff (C2c) enthalten. Der verstärkende Füllstoff (C2c) kann beispielsweise Siliciumdioxid sein. Das Siliciumdioxid kann beispielsweise pyrogenes Siliciumdioxid sein, beispielsweise das von Cabot unter der Marke Cab-O-Sil MS-75D vertriebene, oder es kann ausgefälltes Siliciumdioxid sein. Die Teilchengröße des Silika liegt beispielsweise im Bereich von 0,5 µm bis 20 pm , bevorzugt von 1 bis 10 pm. Beim Siliciumdioxid kann sich um einen oberflächenbehandelten Siliciumdioxid handeln. Die Oberflächenbehandlung kann beispielsweise mit einem Silan oder mit einem Polysiloxan erfolgen. Das zur Behandlung des Siliciumdioxids verwendete Silan oder Polysiloxan enthält üblicherweise hydrophile Gruppen, die an die Siliciumdioxidoberfläche binden, und aliphatisch ungesättigte Kohlenwasserstoff- oder Kohlenwasserstoffoxygruppen und / oder Si-gebundene Wasserstoffatome.

Das Siliciumdioxid kann beispielsweise mit 2 bis 60 Gew.-%, basierend auf dem Siliciumdioxid, eines Alkoxysilans, das Alkenylgruppen, oder eines oligomeren Organopolysiloxans, das Alkenylgruppen enthält, behandelt werden.

Das Verfahren zur Herstellung des Masterbatches (C) umfasst folgende Schritte:
(i) Mischen von Komponenten, die zur Herstellung des vulkanisierten Silikonelastomers (C2) verwendet werden, um eine Silikonzusammensetzung zu bilden,
(ii) Mischen der Silikonzusammensetzung mit der Komponente (C1),
(iii) Vulkanisieren der Silikonzusammensetzung unter Bildung des vulkanisierten Silikonelastomers (C2).

Das Masterbatch kann auch durch den folgenden Ablauf hergestellt werden, wobei die Reihenfolge der Schritte auch variiert werden kann:
1. Das eine oder die mehreren thermoplastischen organischen Materialien (Cl) werden zuerst bei geeigneter Temperatur nach Bedarf erweicht oder geschmolzen.
2. Die Komponenten von (C2), die an der dynamischen Vulkanisation des Diorganopolysiloxans (C2al) oder (C2bl) beteiligt sind, um den Anteil des vulkanisierten Silikonelastomers in der Masterbatch-Zusammensetzung zu bilden, werden dann in das eine oder die mehreren thermoplastischen organischen Materialien (Cl) bei erhöhter Temperatur eingemischt.

Für die oben beschriebenen Prozesse können mehrere Alternativen verwendet werden.

Die Durchführung der genannten Schritte erfolgt in einer Weise, um das Erhitzen und Durchmischen der Bestandteile zu ermöglichen. Dabei muss die Komponente (C1) erweicht werden. Dafür geeignet sind Temperaturen zwischen 185 °C und 310 °C.

Die Durchmischung kann beispielsweise durch Compoundierung unter Verwendung eines einachsigen Extruders, eines zweiachsigen Extruders oder eines mehrachsigen Extruders erreicht werden. Alternativ kann das Mischen unter Verwendung beispielsweise eines Batch-Innenmischers wie eines Z-Klingenmischers oder eines Banbury-Mischers durchgeführt werden, wobei eine ausreichende Mischzeit sichergestellt sein muss, um eine gleichmäßige Verteilung der Komponenten zu erreichen.

Das Masterbatch kann anschließend granuliert werden.

Das vulkanisierte Silikonelastomer (C2) wird hergestellt, indem eine der folgenden Härtungszusammensetzungen dynamisch gehärtet wird, die gegebenenfalls zusätzlich noch die Komponente (C2c) enthält:
1) Ein Diorganopolysiloxan (C2al) mit durchschnittlich mindestens zwei Alkenylgruppen pro Molekül und ein Organopolysiloxan mit mindestens, zwei Si-gebundenen Wasserstoffatomen, bevorzugt mindestens drei Si-gebundenen Wasserstoffatomen pro Molekül (C2a2) und einem Hydrosilylierungskatalysator (C2a3) und gegebenenfalls einem Katalysatorinhibitor (C2a5);
2) Ein Diorganopolysiloxan (C2al) mit durchschnittlich mindestens zwei Alkenylgruppen pro Molekül und einem Radikalinitiator (C2a4) und gegebenenfalls Organopolysiloxan mit mindestens zwei Si-gebundenen Wasserstoffatomen, bevorzugt mindestens drei Si- gebundenen-Wasserstoffatomen pro Molekül (C2a2); oder
3) ein Silanol-terminiertes Diorganopolysiloxan (C2bl), ein Organopolysiloxan mit mindestens zwei Si-gebundenen Wasserstoffatomen (C2a2) und ein Kondensationskatalysator (C2b3).

Das Diorganopolysiloxan (C2al) oder (C2bl) wird zudosiert und unter mechanischer Mischenergie in die erweichte oder geschmolzene Matrix des einen oder der mehreren thermoplastischen organischen Materialien (Cl) verteilt.

Die Bestandteile der alternativen Härtungspakete werden dann getrennt (keine bevorzugte Reihenfolge) oder in Kombination der Mischung zudosiert, um die Vulkanisation des jeweiligen Polyorganosiloxans zu initiieren und zu vervollständigen.

Optional kann ein Hydrosilylierungsreaktionsinhibitor (Additionshärtungsreaktionshemmer) (C2a5) in die Mischung gegeben werden, um die Verweilzeit vor Beendigung der Vulkanisationsreaktion bei einem Hydrosilylierungs- (Additions-) Härtungsprozess zu erhöhen.

Bei Verwendung wird der Inhibitor (C2a5) entweder vor dem Katalysator und / oder dem Vernetzer in die Zusammensetzung dosiert.

Die optionalen Additive (C2c), können je nach Bedarf gleichzeitig oder getrennt während oder nach Abschluss des dynamischen Härtungsprozesses eingeführt werden.

Anstatt jeden Bestandteil einzeln wie oben beschrieben einzubringen, können alternativ vordispergierte Organopolysiloxanzusammensetzungen bei erhöhter Temperatur in das eine oder die mehreren thermoplastischen organischen Materialien (Cl) eingeführt werden.

In einer weiteren Alternative können die Komponenten der Zusammensetzung, die zur Herstellung des vulkanisierten Silikonelastomers verwendet werden, vorgemischt und gehärtet werden, so dass das bereits fertig vulkanisierte Silikonelastomer in das eine oder die mehreren thermoplastischen organischen Materialien (Cl) eingemischt wird.

Ein Beispiel für eine geeignete Schmelzmischausrüstung ist ein Doppelschneckenextruder.

Geeignete Masterbatches und deren Herstellung sind in WO 2019/195516 A1 offenbart. Ein geeignetes kommerziell verfügbares Produkt ist Dow Corning^{™} HMB-1903 Masterbatch (Dow Chemical).

### Komponente D

Als Komponente D kann die erfindungsgemäße Formmasse ein oder mehrere Polymeradditive enthalten, bevorzugt ausgewählt aus der Gruppe bestehend aus Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, weiteren von Komponenten A, B und C verschiedenen polymeren Bestandteilen (beispielsweise funktionelle Blendpartnern), Füll- und Verstärkungsstoffen sowie Farbstoffen und Pigmenten.

In bevorzugter Ausführungsform enthält die Formmasse mindestens ein Polymeradditiv ausgewählt aus der Gruppe bestehend aus Gleit- und Entformungsmitteln, Stabilisatoren, Antidrippingmitteln, Fließfähigkeitspromotoren, Phasenverträglichkeits-vermittlern, weiteren polymeren Bestandteilen, Farbstoffen und Pigmenten.

In bevorzugter Ausfuhrungsform enthält die Formmasse als Stabilisator mindestens einen Vertreter ausgewählt aus der Gruppe bestehend aus sterisch gehinderten Phenolen, Phosphorsäuren, organischen Phosphiten und Schwefel-basierten Co-Stabilisatoren.

### Herstellung der Formmassen und Formkörper

Die thermoplastischen Formmassen können beispielsweise hergestellt werden, indem man die jeweiligen Bestandteile (Komponenten) in bekannter Weise vermischt und bei Temperaturen von bevorzugt 200 °C bis 320 °C, besonders bevorzugt bei 220 °C bis 290 °C, ganz besonders bevorzugt bei 230 °C bis 270 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die jeweiligen Komponenten schmelzcompoundiert und schmelzextrudiert werden.

Die Vermischung der einzelnen Bestandteile der Formmasse kann in bekannter Weise sowohl sukzessive als auch simultan erfolgen, und zwar sowohl bei etwa 20 °C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Spritzguss-, Extrusions-, Blasform- und Tiefziehverfahren. Am meisten bevorzugt ist das Spritzgussverfahren.

Es ist auch möglich, die Bestandteile der Formmasse direkt in eine Spritzgussmaschine oder in ein Extrusionsaggregat zu dosieren und zu Formkörper zu verarbeiten.

Beispiele für solche Formkörper, die aus der erfindungsgemäßen Formmasse hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte. Die erfindungsgemäßen Formmassen eignen sich besonders zur Herstellung von Gehäusen und Verkleidungen von medizinischen Geräten.

Insbesondere geeignet sind die Formmassen für Automobilteile mit Relativbewegung zueinander wie Deckel, Ablagen, ausziehbare Becherhalter, zusammengeklippste Teile wie Verkleidungen, Kunststoffteile rund um den Sitz, usw.

### Beispiele

### Komponente A:

Lineares Polycarbonat auf Basis Bisphenol-A mit einem gewichtsgemittelten Molekulargewicht Mw von 26000 g/mol (bestimmt durch GPC in Methylenchlorid mit Polycarbonat als Standard).

### Komponente B-1a:

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf reinem Polybutadienkautschuk als Pfropfgrundlage enthaltend Inklusionen aus Styrol-Acrylnitril-Copolymerisat und eine nicht an den Kautschuk gebundene Styrol-Acrylnitril-Copolymerisat-Matrix enthält. Komponente B-1a weist ein A:B:S-Verhältnis von 23:9:68 Gew.-% und einen Gelgehalt, bestimmt als in Aceton unlöslicher Anteil, von 20 Gew.-% auf. Das in Tetrahydrofuran lösliche Styrol-Acrylnitril-Copolymer in Komponente B-1a weist ein gewichtsgemitteltes Molekulargewicht M_{w} (gemessen per GPC in Tetrahydrofuran als Lösungsmittel mit Polystyrol als Standard) von 160 kg/mol auf. Die mittlere Partikelgröße der dispersen Phase D50, gemessen per Ultrazentrifugation, beträgt 0,9 µm. Die Schmelzeflussrate (MFR) der Komponente B-1a, gemessen nach ISO 1133 (Version von 2012) bei 220°C mit einer Stempellast von 10 kg, beträgt 6,5 g/10 min.

### Komponente B-1b:

Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Copolymerisat gepfropften Kautschukpartikeln basierend auf reinem Polybutadienkautschuk als Pfropfgrundlage enthaltend Inklusionen aus Styrol-Acrylnitril-n-Butylacrylat-Copolymerisat und eine nicht an den Kautschuk gebundene Styrol-Acrylnitril-n-Butylacrylat-Copolymerisat-Matrix enthält. Komponente B-1b weist ein A:B:S:BA-Verhältnis von 22,5:10:63:4,5 Gew.-% und einen Gelgehalt, bestimmt als in Aceton unlöslicher Anteil, von 19 Gew.-% auf. Das in Tetrahydrofuran lösliche Styrol-Acrylnitril-n-Butylacrylat-Copolymer in Komponente B-1b weist ein gewichtsgemitteltes Molekulargewicht M_{w} (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,5 µm. Die Schmelzeflussrate (MFR) der Komponente B-1b, gemessen nach ISO 1133 (Version von 2012) bei 220°C mit einer Stempellast von 10 kg, beträgt 28 g/10 min.

### Komponente B-2:

ABS-Emulsionspolymerisat mit einem Acrylnitril : Butadien : Styrol-Gewichtsverhältnis von 12:57:31 Gew.-%. und einer mittleren Teilchengröße d50 der Pfropfgrundlage von 340 nm bestimmt durch Ultrazentrifugenmessung. Die Kautschukpartikel enthalten keine Inklusionen.

### Komponente C:

Dow Coming^{™} HMB-1903 Masterbatch (Dow Chemical).

### Komponente D-1:

Thermostabilisator, Irganox^{™} B900, (Gemisch aus 80% Irgafos^{™} 168 (Tris(2,4-di-tert-butylphenyl)-phosphit) und 20% Irganox^{™} 1076 (2,6-Di-tert-butyl-4-(octadecanoxycarbonylethyl)phenol) (BASF).

### Komponente D-2:

Irganox^{™} 1076, 2,6-Di-tert.-butyl-4-(octadecanoxycarbonylethyl)phenol (BASF).

### Komponente D-3:

Pentaerythrittetrastearat als Gleit-/Entformungsmittel.

### Komponente D-4:

Black Pearls 800 (Cabot GmbH).

In den Vergleichsbeispielen wird Bayblend^{®} T85 XF (Covestro Deutschland AG) eingesetzt. Dabei handelt es sich um ein Blend aus Polycarbonat und einem Acrylnitril-Butadien-Styrol Copolymer (ABS) mit einem Gewichtsverhältnis von B1:B2 von kleiner 1.

Als Schlittenproben:
Makrolon^{®} M2600 (Covestro Deutschland AG), ein lineares Polycarbonat auf Basis Bisphenol-A mit einem gewichtsgemittelten Molekulargewicht Mw von 26000 g/mol (bestimmt durch GPC in Methylenchlorid mit Polycarbonat als Standard) sowie ein Polymethylmethacrylat (PMMA) (Plexiglas^{™} 8N, Evonik Industries AG).

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260 °C. Die Formkörper wurden bei einer Massetemperatur von 260 °C bzw. 300 °C (für Makrolon^{®} M2600) und 250 °C (für Plexiglas^{™} 8N) und einer Werkzeugtemperatur von 80 °C bzw. 70 °C (für Plexiglas^{™} 8N) auf einer Spritzgießmaschine Typ Arburg 270 E hergestellt.

Materialpaarprüfung zur Bestimmung des Stick-Slip Risikos wurde auf dem Stick-Slip-Prüfstand (SSP-04) der Firma ZIEGLER-Instruments GmbH ausgeführt (VDA 230-206; 2005).

Als Maß für die Haft-Gleit Neigung (Stick-Slip) dient Risikoprioritätszahl (RPZ). Sie beschreibt die Neigung einer Materialpaarung, die unter den gegebenen Bedingungen zum Stick-Slip neigt. RPZ kann einen Wert von 1 bis 10 annehmen. Für die Bewertung einer Materialpaarung ist eine RPZ zwischen 1 und 3 als unkritisch anzusehen, d. h. unter den getesteten Bedingungen ist nicht mit Stick-Slip zu rechnen. Bei einer RPZ von 4 bis 5 befindet sich die Materialpaarung in einem Grenzbereich. Hörbare Störgeräusche durch den Stick-Slip Effekt sind nicht auszuschließen. Bei einer RPZ größer als 6 ist die Materialpaarung hinsichtlich des Stick-Slip Effekts kritisch und es ist mit hörbaren Störgeräuschen zu rechnen.

Das Prinzip der Stick-Slip-Messung beruht darauf, dass zwei Proben unter Einwirkung einer Normalkraft (40N) und mit vordefinierter Geschwindigkeit (1mm/s) in Relativbewegung zueinander versetzt werden. Die ausgewählten Materialoberflächen werden dadurch aneinander "scherend" gerieben. Der Prüfstand setzt sich aus einer Bewegungseinheit, dem flachen Schlitten, und einer Krafteinheit, einer mit einem runden Probenträger ausgerüsteten Blattfeder, zusammen. Die Schlittenprobe (60 mm × 70 mm) und Federprobe (30 mm × 50 mm) werden mittels doppelseitigen Klebebandes aufgeklebt. Durch pneumatischen Antrieb wird die Federprobe gegen die Schlittenprobe mit vordefinierter Normalkraft vorgefahren und anschließend der Schlitten durch einen elektrischen Motor in eine lineare Oszillationsbewegung versetzt. Der oszillierende Bewegung des Schlittens hat einen Verfahrweg (Prüfdistanz) von 20 mm. Der Wechsel zwischen Anhaften und Gleiten ist für die Entstehung von stick-slip-bedingten Störgeräuschen verantwortlich.

Als Schlittenproben werden Polycarbonat und PMMA verwendet, als Federproben werden erfindungsgemäße Formmassen und Formassen auf Basis von Bayblend^{®} T85 XF als Vergleich eingesetzt.

**Tabelle 1: Zusammensetzung der Formmassen**

| **Komponenten [Gew.-Teile]** | **1 (Vgl.)** | **2 (Vgl.)** | **3** | **4** |
|---|---|---|---|---|
| Bayblend^{®} T85 XF | 96,00 | 94,00 | - | - |
| A | - | - | 65,66 | 63,66 |
| B-1a | - | - | 24,00 | 24,00 |
| B-1b | - | - | 3,84 | 3,84 |
| B-2 | - | - | 0,96 | 0,96 |
| C | 4,00 | 6,00 | 4,00 | 6,00 |
| D-1 | - | - | 0,10 | 0,10 |
| D-2 | - | - | 0,20 | 0,20 |
| D-3 | - | - | 0,74 | 0,74 |
| D-4 | - | - | 0,50 | 0,50 |

**Tabelle 2: Ergebnisse der Stick-Slip Prüfung**

| Federprobe | Schlittenprobe | Kraft (N) | Schlittengeschwindigkeit (mm/s) | RPZ |
|---|---|---|---|---|
| 1 (Vgl.) | Makrolon^{®} | 40 | 1 | 7 |
| 3 | M2600 | 40 | 1 | 2 |
| 1 (Vgl.) | Plexiglas^{™} 8N | 40 | 1 | 6 |
| 3 | | 40 | 1 | 3 |
| 2 (Vgl.) | | 40 | 1 | 6 |
| 4 | | 40 | 1 | 3 |

Aus Tabelle 2 ist ersichtlich, dass nur die erfindungsgemäße Zusammensetzungen gemäß Beispielen 3 und 4 (Tabelle 1) gegenüber den Vergleichsbeispielen 1 und 2, erfindungsgemäße Aufgabe lösen, d.h. nur die erfindungsgemäße Zusammensetzungen 3 und 4 die Risikoprioritätszahl (RPZ) im unkritischen Bereich aufweisen und somit eine geringe Neigung zum Stick-Slip und Störgeräuschen zeigen.

## Patentansprüche

1. Thermoplastische Formmasse enthaltend
A) mindestens ein Polymer ausgewählt aus der Gruppe bestehend aus Polycarbonat und Polyestercarbonat,
B) ein Polymer enthaltend
B1) mindestens ein kautschukmodifiziertes Vinyl(co)polymerisat enthaltend
B1.1) 80 bis 95 Gew.-%, bezogen auf B. 1, wenigstens eines Vinylmonomeren und
B1.2) 5 bis 20 Gew.-%, bezogen auf B1, einer oder mehrerer kautschukelastischer Polybutadien-haltiger Pfropfgrundlagen,
wobei B1
mit den Vinylmonomeren B1.1 gepfropfte Polybutadien-haltige Kautschukpartikel, die Inklusionen aus Vinyl(co)polymerisat bestehend aus den Vinylmonomeren B1.1 enthalten,
und
eine nicht an diese Kautschukpartikel gebundene und nicht in Kautschukpartikel eingeschlossene Vinyl(co)polymerisat-Matrix bestehend aus den Vinylmonomeren B1.1
enthält
und optional B2) weitere mit Vinylmonomeren gepfropfte Kautschukpartikel aus
B2.1) 5 bis 75 Gew.-%, bezogen aufB.2, wenigstens eines Vinylmonomeren auf
B2.2) 25 bis 95 Gew.-%, bezogen auf B2, einer oder mehrerer kautschukelastischer Pfropfgrundlagen,
wobei das Gewichtsverhältnis der Komponente B1 zu B2 mindestens 5: 1 beträgt,
C) ein beim Raumtemperatur festes Masterbatch enthaltend
C1) ein oder mehrere Copolymere enthaltend Struktureinheiten abgeleitet von einem Olefin und Struktureinheiten abgeleitet von einem polaren Comonomeren ,
C2) ein vulkanisiertes Silikonelastomer.

2. Formmasse gemäß Anspruch 1, wobei die in Komponente B1 enthaltenden mit Vinylmonomeren B1.1 gepfropften Polybutadien-haltigen Kautschukpartikel einen mittleren Partikeldurchmesser D50 gemessen per Ultrazentrifugation von 0,5 bis 1,5 µm aufweisen.

3. Formmasse gemäß Anspruch 1, wobei die Komponente B1 einen Polybutadiengehalt von 7 bis 15 Gew.-% aufweist.

4. Formmasse gemäß einem der vorhergehenden Ansprüche, wobei die Komponente B1 durch ein Massepolymerisationsverfahrens hergestellt wird.

5. Formmasse gemäß einem der vorhergehenden Ansprüche, wobei die Komponente B2 durch ein Emulsionspolymerisationsverfahrens hergestellt wird.

6. Formmasse gemäß einem der vorhergehenden Ansprüche, wobei der Polybutadiengehalt 2 bis 7 Gew.-%, bezogen auf die Formmasse, beträgt.

7. Formmasse gemäß einem der vorhergehenden Ansprüche, wobei die Komponente B1 eine Mischung aus zwei kautschukmodifiziertes Vinyl(co)polymerisaten ist und wobei bei dem ersten dieser kautschukmodifizierten Vinyl(co)polymerisate die Vinylmonomere B.1.1 eine Mischung aus Styrol und Acrylnitril ist und wobei bei dem zweiten dieser kautschukmodifizierten Vinyl(co)polymerisate die Vinylmonomere B.1.1 eine Mischung aus Styrol, Acrylnitril und Butylacrylat ist

8. Formmasse gemäß einem der vorhergehenden Ansprüche, wobei die Komponente C1 ein Copolymer enthaltend Struktureinheiten abgeleitet von Ethylen und einem Acrylat ist und wobei der Anteil von Struktureinheiten abgeleitet von einem Acrylat in der Komponente C1 6 bis 12 Gew.-% beträgt.

9. Formmasse gemäß einem der vorhergehenden Ansprüche, wobei die Komponente C 40 bis 80 Gew.-% der Komponente C1 und 20 bis 60 Gew.-% der Komponente C2 enthält.

10. Formmasse gemäß einem der vorherigen Ansprüche, enthaltend
50-80 Gew.-% der Komponente A,
10-40 Gew.-% der Komponente B,
1-10 Gew.-% der Komponente C.

11. Formmasse gemäß einem der vorhergehenden Ansprüche, wobei die Komponente C durch dynamische Vulkanisation hergestellt wird, wobei das vulkanisierte Silikonelastomer C2 in die thermoplastische Matrix C1 durch einen Mischprozess dispergiert wird.

12. Formmasse gemäß einem der vorherigen Ansprüche, weiterhin enthaltend als Komponente D mindestens ein Additiv ausgewählt aus der Gruppe bestehend aus Flammschutzmitteln, Gleit- und Entformungsmitteln, Stabilisatoren, Fließfähigkeitspromotoren, Verträglichkeitsvermittlern sowie Farbstoffen und Pigmenten.

13. Verfahren zur Herstellung einer Formmasse gemäß einem der Ansprüche 1 bis 12, wobei die Komponenten A bis C und optional D bei einer Temperatur von 200 bis 320 °C miteinander vermischt und anschließend abgekühlt und granuliert werden.

14. Verwendung einer Formmasse gemäß einem der Ansprüche 1 bis 13 zur Herstellung von Formkörpern.

15. Formkörper, erhältlich aus einer Formmasse gemäß einem der Ansprüche 1 bis 13.

## Claims

1. Thermoplastic moulding compound containing
A) at least one polymer selected from the group consisting of polycarbonate and polyester carbonate,
B) a polymer containing
B1) at least one rubber-modified vinyl (co)polymer containing
B1.1) 80% to 95% by weight, based on B.1, of at least one vinyl monomer and
B1.2) 5% to 20% by weight, based on B1, of one or more elastomeric polybutadiene-containing graft substrates,
wherein B1
contains polybutadiene-containing rubber particles grafted with the vinyl monomers B1.1 which contain inclusions of vinyl (co)polymer consisting of the vinyl monomers B1.1
and
a vinyl (co)polymer matrix consisting of the vinyl monomers B1.1 which is not bonded to these rubber particles and not included in rubber particles,
and
optionally B2) further rubber particles grafted with vinyl monomers composed of
B2.1) 5% to 75% by weight, based on B.2, of at least one vinyl monomer and
B2. 2) 25% to 95% by weight, based on B2, of one or more elastomeric graft substrates,
wherein the weight ratio of component B1 to B2 is at least 5:1,
C) a masterbatch solid at room temperature containing
C1) one or more copolymers containing structural units derived from an olefin and structural units derived from a polar comonomer,
C2) a vulcanized silicone elastomer.

2. Moulding compound according to Claim 1, wherein the polybutadiene-containing rubber particles grafted with vinyl monomers B1.1 present in component B1 have an average particle diameter D50 measured by ultracentrifugation of 0.5 to 1.5 µm.

3. Moulding compound according to Claim 1, wherein component B1 has a polybutadiene content of 7% to 15% by weight.

4. Moulding compound according to any of the preceding claims, wherein component B1 is produced by a bulk polymerisation process.

5. Moulding compound according to any of the preceding claims, wherein component B2 is produced by an emulsion polymerisation process.

6. Moulding compound according to any of the preceding claims, wherein the polybutadiene content is 2% to 7% by weight based on the moulding compound.

7. Moulding compound according to any of the preceding claims, wherein component B1 is a mixture of two rubber-modified vinyl (co)polymers and wherein in the first of these rubber-modified vinyl (co)polymers the vinyl monomer B.1.1 is a mixture of styrene and acrylonitrile and wherein in the second of these rubber-modified vinyl (co)polymers, the vinyl monomer B.1.1 is a mixture of styrene, acrylonitrile and butyl acrylate.

8. Moulding compound according to any of the preceding claims, wherein component C1 is a copolymer containing structural units derived from ethylene and an acrylate and wherein the proportion of structural units derived from an acrylate in component C1 is 6% to 12% by weight.

9. Moulding compound according to any of the preceding claims, wherein component C contains 40 to 80% by weight of component C1 and 20% to 60% by weight of component C2.

10. Moulding compound according to any of the preceding claims, containing
50%-80% by weight of component A,
10%-40% by weight of component B,
1%-10% by weight of component C.

11. Moulding compound according to any of the preceding claims, wherein component C is produced by dynamic vulcanization, wherein the vulcanized silicone elastomer C2 is dispersed in the thermoplastic matrix C1 by a mixing process.

12. Moulding compound according to any of the preceding claims, further containing as component D at least one additive selected from the group consisting of flame retardants, lubricants and demoulding agents, stabilizers, flow promoters, compatibilizers and dyes and pigments.

13. Process for producing a moulding compound according to any of Claims 1 to 12, wherein the components A to C and optionally D are mixed with one another at a temperature of 200°C to 320°C and subsequently cooled and pelletized.

14. Use of a moulding compound according to any of Claims 1 to 13 for production of moulded articles.

15. Moulded article obtainable from a moulding compound according to any of Claims 1 to 13.

## Revendications

1. Masse de moulage thermoplastique, contenant
A) au moins un polymère choisi dans le groupe constitué par le polycarbonate et le polyestercarbonate,
B) un polymère contenant
B1) au moins un (co)polymère de vinyle modifié par caoutchouc contenant
B1.1) 80 à 95% en poids, par rapport à B1, d'au moins un monomère de vinyle et
B1.2) 5 à 20% en poids, par rapport à B1, d'une ou de plusieurs bases de greffage contenant du polybutadiène, élastiques comme du caoutchouc,
où B1 contient
des particules de caoutchouc contenant du polybutadiène, greffées par les monomères de vinyle B1.1, qui contiennent des inclusions de (co)polymère de vinyle constitué par les monomères de vinyle B1.1 et
une matrice de (co)polymère de vinyle non liée à ces particules de caoutchouc et non incluse dans des particules de caoutchouc, constituée par les monomères de vinyle B1.1
et éventuellement B2) d'autres particules de caoutchouc greffées par des monomères de vinyle, constituées par
B2.1) 5 à 75% en poids, par rapport à B2, d'au moins un monomère de vinyle sur
B2.2) 25 à 95% en poids, par rapport à B2, d'une ou de plusieurs bases de greffage, élastiques comme du caoutchouc,
le rapport pondéral des composants B1 à B2 valant au moins 5:1,
C) un lot maître solide à température ambiante contenant
C1) un ou plusieurs copolymères contenant des motifs structuraux dérivés d'une oléfine et des motifs structuraux dérivés d'un comonomère polaire,
C2) un élastomère de silicone vulcanisé.

2. Masse de moulage selon la revendication 1, les particules de caoutchouc contenant du polybutadiène, greffées par les monomères de vinyle B1.1, contenues dans le composant B1 présentant un diamètre moyen de particule D50, mesuré par ultracentrifugation, de 0,5 à 1,5 µm.

3. Masse de moulage selon la revendication 1, le composant B1 présentant une teneur en polybutadiène de 7 à 15% en poids.

4. Masse de moulage selon l'une des revendications précédentes, le composant B1 étant préparé par un procédé de polymérisation en masse.

5. Masse de moulage selon l'une des revendications précédentes, le composant B2 étant préparé par un procédé de polymérisation en émulsion.

6. Masse de moulage selon l'une des revendications précédentes, la teneur en polybutadiène étant de 2 à 7% en poids, par rapport à la masse de moulage.

7. Masse de moulage selon l'une des revendications précédentes, le composant B1 étant un mélange de deux (co)polymères de vinyle modifiés par caoutchouc et, pour le premier de ces (co)polymères de vinyle modifiés par caoutchouc, les monomères de vinyle B1.1 étant un mélange de styrène et d'acrylonitrile et, pour le deuxième de ces (co)polymères de vinyle modifiés par caoutchouc, les monomères de vinyle B1.1 étant un mélange de styrène, d'acrylonitrile et d'acrylate de butyle.

8. Masse de moulage selon l'une des revendications précédentes, le composant C1 étant un copolymère contenant des motifs structuraux dérivés d'éthylène et d'un acrylate et la proportion de motifs structuraux dérivés d'un acrylate dans le composant C1 étant de 6 à 12% en poids.

9. Masse de moulage selon l'une des revendications précédentes, le composant C contenant 40 à 80% en poids du composant C1 et 20 à 60% en poids du composant C2.

10. Masse de moulage selon l'une des revendications précédentes, contenant
50-80% en poids de composant A,
10-40% en poids de composant B,
1-10% en poids de composant C.

11. Masse de moulage selon l'une des revendications précédentes, le composant C étant préparé par vulcanisation dynamique, l'élastomère de silicone vulcanisé C2 étant dispersé par un procédé de mélange dans la matrice thermoplastique C1.

12. Masse de moulage selon l'une des revendications précédentes, contenant en outre, comme composant D, au moins un additif choisi dans le groupe constitué par les agents ignifuges, les agents lubrifiants et de démoulage, les stabilisants, les promoteurs de l'aptitude à l'écoulement, les promoteurs de compatibilité ainsi que les colorants et les pigments.

13. Procédé pour la préparation d'une masse de moulage selon l'une des revendications 1 à 12, les composants A à C et éventuellement D étant mélangés les uns avec les autres à une température de 200 à 320°C et ensuite refroidis et granulés.

14. Utilisation d'une masse de moulage selon l'une des revendications 1 à 13 pour la production de corps moulés.

15. Corps moulé, pouvant être obtenu à partir d'une masse de moulage selon l'une des revendications 1 à 13.
